# EUROPÄISCHE PATENTANMELDUNG

(11) **EP 3 291 381 A1**
(43) Veröffentlichungstag der Anmeldung: **07.03.2018**
(21) Anmeldenummer: 17188931.4
(22) Anmeldetag: 01.09.2017
(51) Int. Cl.: H01R 13/74, G02B 6/38

(54) **STECKVERBINDERGEHÄUSE UND STECKVERBINDER**

(30) Priorität: 05.09.2016 DE 202016104891 U
(71) Anmelder: KLOTZ AIS GmbH, 85591 Vaterstetten (DE)
(72) Erfinder: KLOTZ, Dieter, 84405 Dorfen (DE)
(74) Vertreter: Prinz & Partner mbB

(57) **Zusammenfassung**

Die Erfindung betrifft ein Steckverbindergehäuse (10) mit einem im Wesentlichen kreiszylinderförmigen Grundkörper (12), der eine Aufnahme (16) für eine optische Steckereinheit (18) aufweist, und einem Flansch zur Befestigung des Steckverbindergehäuses (10) im Bereich einer Montageöffnung eines Gehäuses, wobei der Flansch (14) eine, insbesondere im Wesentlichen rechteckige, Flanschplatte (26) umfasst, in der mindestens zwei Befestigungsöffnungen (28, 30) angeordnet sind, mittels derer das Steckverbindergehäuse (10) am Gehäuse befestigt werden kann. Ferner ist ein Steckverbinder (42) beschrieben

## Beschreibung

Die Erfindung betrifft ein Steckverbindergehäuse mit einem im Wesentlichen kreiszylinderförmigen Grundkörper.

Darüber hinaus betrifft die Erfindung einen Steckverbinder zur optischen Datenübertragung, mit einem Steckverbindergehäuse der eingangs genannten Art.

Steckverbindergehäuse mit kreiszylinderförmigen Grundkörpern sind im Stand der Technik bekannt. Steckverbinder mit solchen Steckverbindergehäusen können in einem Gehäuse, das z. B. zu einer Maschine oder Anlage gehört, befestigt werden. Dafür wird im Gehäuse eine Montageöffnung vorgesehen, durch die der kreiszylinderförmige Grundkörper gesteckt wird.

In der Regel umfassen bekannte Steckverbinder zudem eine axiale Anlagekontur mittels der sie im Bereich der Montageöffnung an einer Seite des Gehäuses angelegt werden können. Häufig ist die Anlagekontur als Flansch realisiert. Auf der entgegengesetzten Seite des Gehäuses wird dann eine zentrale Befestigungsmutter, die den Grundkörper des Steckverbinders umgreift, auf den Steckverbinder aufgeschraubt. Der Steckverbinder wird also am Gehäuse gehalten, indem die Anlagekontur und die Befestigungsmutter einen Abschnitt des Gehäuses einklemmen.

Die Aufgabe der Erfindung ist, solche Steckverbindergehäuse und zugehörige Steckverbinder weiter zu verbessern. Dabei soll insbesondere ein Steckverbinder geschaffen werden, der einfach an einem Gehäuse montierbar ist.

Die Aufgabe wird durch ein Steckverbindergehäuse der eingangs genannten Art gelöst, bei dem der im Wesentlichen kreiszylinderförmige Grundkörper eine Aufnahme für eine optische Steckereinheit aufweist und das Steckverbindergehäuse einen Flansch zur Befestigung des Steckverbindergehäuses im Bereich einer Montageöffnung eines Gehäuses umfasst, wobei der Flansch eine, insbesondere im Wesentlichen rechteckige, Flanschplatte umfasst, in der mindestens zwei Befestigungsöffnungen angeordnet sind, mittels derer das Steckverbindergehäuse am Gehäuse befestigt werden kann. Die optische Steckereinheit kann auch als Faseroptik oder Faseroptik-Einsatz bezeichnet werden. Die Montageöffnung ist beispielsweise als sogenannter D-Serien-Ausschnitt ausgebildet. Durch die rechteckige Gestaltung der Flanschplatte können in einem vorgegebenen Bereich eines Gehäuses sehr viele Steckverbinder mit einem solchen Steckverbindergehäuse angeordnet werden. Die Packungsdichte der Steckverbinder lässt sich also vergrößern. Die Steckverbindergehäuse können dabei direkt benachbart angeordnet werden. In den zwei Befestigungsöffnungen können z. B. Befestigungsschrauben angeordnet werden, mittels derer das Steckverbindergehäuse mit dem Gehäuse verschraubt wird. Die Befestigungsöffnungen sind in einer bezüglich des Grundkörpers axialen Richtung einfach zugänglich. Eine bezüglich des Grundkörpers radiale Zugänglichkeit der Befestigungsöffnungen und des Flansches ist nicht notwendig, weshalb das Steckverbindergehäuse nur einen geringen Bauraum beansprucht.

Der Flansch kann im Wesentlichen konzentrisch zum Grundkörper angeordnet sein, sodass sich ein ansprechendes Design ergibt.

In einer Ausführungsform sind die Befestigungsöffnungen in einem Randbereich der Flanschplatte angeordnet, insbesondere in den Ecken. Bei einem Steckverbindergehäuse mit einer im Wesentlichen rechteckigen Flanschplatte sind z. B. in zwei diagonal entgegengesetzten Ecken Befestigungsöffnungen angeordnet. Alternativ können auch in allen vier Ecken Befestigungsöffnungen vorgesehen sein. Die Befestigungsöffnungen sind dabei stets vom Grundkörper beabstandet, sodass sie zur Montage und Demontage eines Steckverbindergehäuses an einem Gehäuse einfach zugänglich sind.

In einer Variante ist das Steckverbindergehäuse einstückig hergestellt und vorzugsweise aus einem Kunststoff, einem faserverstärkten Kunststoff oder einem Metall gefertigt. Damit muss das Steckverbindergehäuse nicht aus einzelnen Komponenten montiert werden. Es ist somit eine kostengünstige und schnelle Herstellung gewährleistet. Je nach Anwendung ist einer der vorgenannten Werkstoffe vorteilhaft.

Dabei kann das Steckverbindergehäuse aus einem Polyamid gefertigt sein. Das Steckverbindergehäuse verfügt somit über eine hohe Festigkeit und Zähigkeit. Zudem weist das Steckverbindergehäuse eine gute chemische Beständigkeit auf, z. B. gegenüber organischen Lösungsmitteln.

Alternativ kann das Steckverbindergehäuse aus einem glasfaser- und/oder kohlefaserverstärkten Kunststoff gefertigt sein. Das Steckverbindergehäuse weist dann eine sehr hohe Steifigkeit und Festigkeit bei einem geringen Gewicht auf.

In einer Gestaltungsalternative ist das Steckverbindergehäuse mittels eines 3D-Druckverfahrens hergestellt. 3D-Druckverfahren werden auch häufig als Rapid Prototyping, generative oder additive Fertigungsverfahren bezeichnet. Diese Begriffe sind hier als Synonyme zu verstehen. Das Steckverbindergehäuse kann somit wirtschaftlich in Losgröße eins gefertigt werden. Darüber hinaus können bei der Herstellung mit Hilfe eines 3D-Druckverfahrens auf einfache Weise individualisierte Steckverbindergehäuse hergestellt werden.

Alternativ kann das Steckverbindergehäuse auch durch spanende Bearbeitung, Gießen oder Spritzgießen hergestellt sein.

Eine Ausführungsform sieht vor, dass die Flanschplatte eine Breite von 20 mm bis 35 mm, vorzugsweise von 15 mm bis 30 mm, und eine Länge von 25 mm bis 40 mm, vorzugsweise von 30 mm bis 35 mm, hat. Die Flanschplatte kann z. B. 31 mm lang und 26 mm breit sein. Diese Größe erlaubt die Aufnahme gängiger optischer Steckereinheiten und gleichzeitig eine zuverlässige und dauerhafte Befestigung des Steckverbindergehäuses an einem Gehäuse. Eine gute Zugänglichkeit der Befestigungsöffnungen für die Montage und Demontage ist ebenfalls gegeben.

Die Befestigungsöffnungen können in einer ersten Richtung einen Abstand von 15 mm bis 20 mm und in einer zweiten, senkrecht auf der ersten Richtung stehenden Richtung einen Abstand von 20 mm bis 30 mm zueinander haben, wobei die Richtungen jeweils entlang einer Kante der Flanschplatte verlaufen. Beispielsweise können die Befestigungsöffnungen in einer ersten Richtung einen Abstand von 19 mm und in einer zweiten Richtung einen Abstand von 24 mm zueinander haben. Das Steckverbindergehäuse kann somit zuverlässig an einem Gehäuse befestigt werden. Es können dabei zwei Befestigungsöffnungen in diagonal entgegengesetzten Ecken einer im Wesentlichen rechteckigen Flanschplatte angeordnet sein.

Gemäß einer Variante weist der Grundkörper einen ersten und einen zweiten Abschnitt auf, deren Durchmesser unterschiedlich sind, insbesondere wobei der erste Abschnitt einer ersten Seite des Flansches und der zweite Abschnitt einer zweiten, der ersten Seite entgegengesetzten Seite des Flansches zugeordnet ist. Einer der beiden Abschnitte wird bei der Montage des Steckverbindergehäuses im Bereich einer Montageöffnung eines Gehäuses durch die Montageöffnung gesteckt. Die beiden Abschnitte können dabei gemäß des Poka-Yoke-Prinzips gestaltet sein, sodass nur einer der Abschnitte durch die Montageöffnung gesteckt werden kann. Versehentliche Fehler bei der Montage werden somit vermieden. Wenn zudem der Flansch im Übergangsbereich der beiden Abschnitte angeordnet ist, wird das Steckverbindergehäuse in der Nähe seines Schwerpunkts im Gehäuse montiert. Es wird somit sicher darin gehalten.

Bevorzugt weist dabei der zweite Abschnitt eine innenliegende Anschlagsfläche für die optische Steckereinheit auf. Die optische Steckereinheit kann somit einfach, eindeutig und sicher im Steckverbindergehäuse positioniert werden.

Der Grundkörper kann einen Durchmesser von 20 mm bis 30 mm, vorzugsweise von 22 mm bis 25 mm, haben. Beispielsweise weist ein erster Abschnitt des Grundkörpers einen äußeren Durchmesser von 23,8 mm auf. Der Grundkörper ist damit so dimensioniert, dass er gängige optische Steckereinheiten aufnehmen und zuverlässig halten kann.

Vorzugsweise ist in der Aufnahme mindestens eine Verdrehsicherungsnut zur Verdrehsicherung einer in der Aufnahme angeordneten optischen Steckereinheit angeordnet. Die optische Steckereinheit kann dann nur in einer festgelegten Drehposition im Steckverbindergehäuse montiert werden. So wird sichergestellt, dass die Drehorientierung der optischen Kontakte relativ zum Steckverbindergehäuse fix ist. Die Verdrehsicherung kann dabei auch als Positionierhilfe wirken.

Die Aufnahme, und somit das Steckverbindergehäuse, können mit einer Vielzahl an optischen Steckereinheiten verwendet werden. Somit ist es möglich, bestehende Steckverbinder auf das erfindungsgemäße Steckverbindergehäuse umzurüsten.

Zusätzlich wird die Aufgabe durch einen Steckverbinder der eingangs genannten Art gelöst, wobei in der Aufnahme eine optische Steckereinheit angeordnet ist. Die optische Steckereinheit kann dabei aus dem Stand der Technik bekannt sein. Bezüglich der Vorteile eines solchen Steckverbinders wird auf die vorstehenden Ausführungen verwiesen.

Vorzugsweise umfasst die optische Steckereinheit zwei bis zwölf optische Fasern, die als Monomodefasern oder als Multimodefasern ausgebildet sind. Der Steckverbinder ist somit für eine große Bandbreite an Übertragungsaufgaben aus der optischen Datenübertragung geeignet.

Die Erfindung wird nachstehend anhand der beigefügten Zeichnungen erläutert. Es zeigen:
- Figur 1 ein erfindungsgemäßes Steckverbindergehäuse in einer perspektivischen Ansicht,
- Figur 2 das erfindungsgemäße Steckverbindergehäuse aus Figur 1 in einer Vorderansicht,
- Figur 3 das erfindungsgemäße Steckverbindergehäuse aus Figur 1 in einer Seitenansicht,
- Figur 4 einen erfindungsgemäßen Steckverbinder mit einem erfindungsgemäßen Steckverbindergehäuse in einer Explosionsdarstellung
- Figur 5 einen erfindungsgemäßen Steckverbinder, der in einem Gehäuse montiert ist, in einer perspektivischen Darstellung,
- Figur 6 den erfindungsgemäßen Steckverbinder aus Figur 5 während der Montage in einem Gehäuse,
- Figur 7 den erfindungsgemäßen Steckverbinder aus Figur 5 in einer Vorderansicht,
- Figur 8 den erfindungsgemäßen Steckverbinder aus Figur 5 in einer Seitenansicht und
- Figur 9 das erfindungsgemäße Steckverbindergehäuse aus Figur 1 in einer Schnittdarstellung entlang der Ebene A - A in Figur 2.

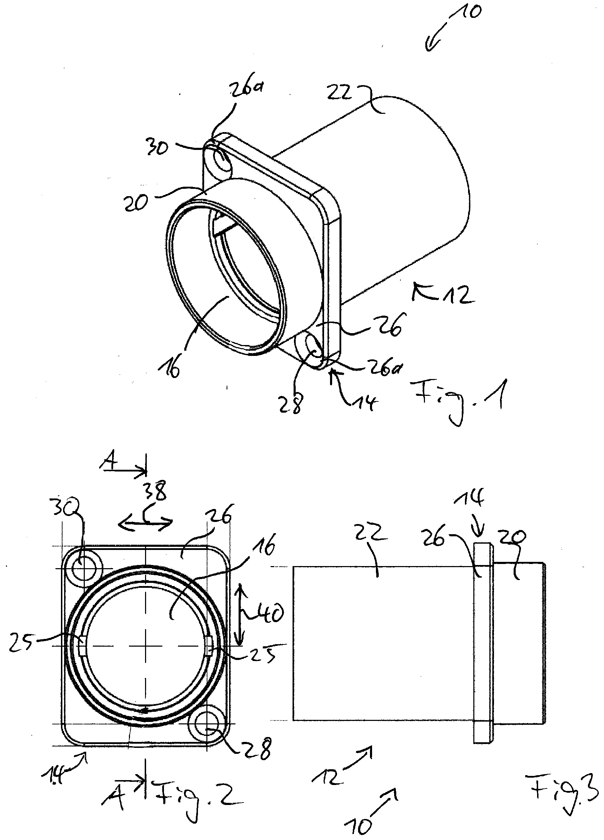

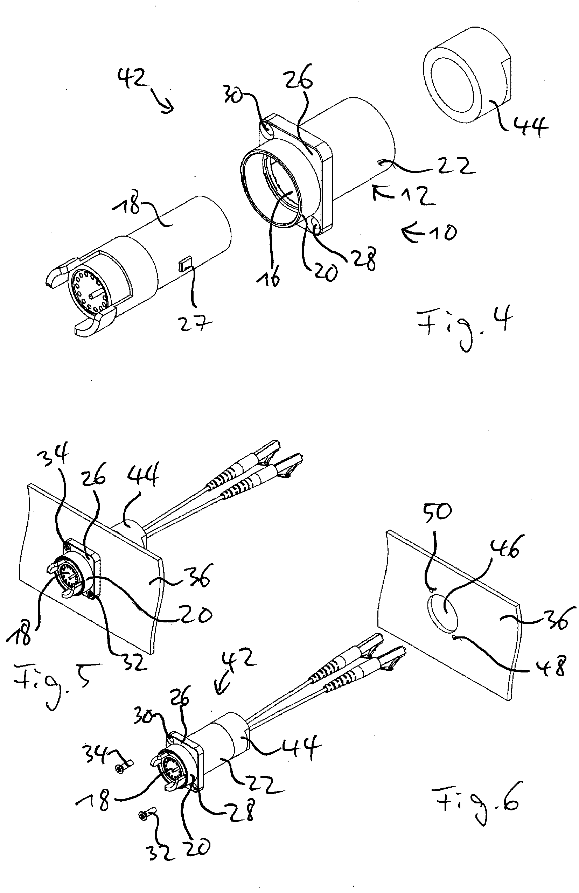

Figur 1 zeigt ein Steckverbindergehäuse 10 mit einem kreiszylinderförmigen Grundkörper 12 und einem am Grundkörper 12 angeordneten Flansch 14. Im Grundkörper 12 ist eine Aufnahme 16 für eine optische Steckereinheit 18 vorgesehen, die entsprechend zylinderförmig ist (siehe Figur 4).

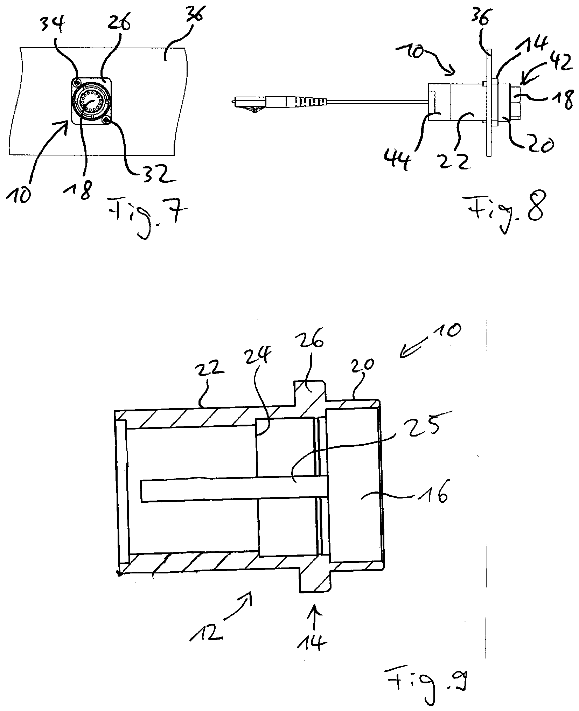

Der Grundkörper 12 besteht in der gezeigten Ausführungsform aus einem ersten Abschnitt 20 und einem zweiten Abschnitt 22. Die Durchmesser der beiden Abschnitte 20, 22 sind unterschiedlich, wie insbesondere in Figur 3 und Figur 9 zu sehen ist.

Darüber hinaus ist der erste Abschnitt 20 auf einer ersten Seite des Flansches 14 angeordnet und der zweite Abschnitt 22 auf einer zweiten, entgegengesetzten Seite des Flansches 14. Somit kann der Flansch 14 als Übergang der beiden Abschnitt 20, 22 angesehen werden.

Innerhalb des Grundkörpers 12, genauer im zweiten Abschnitt 22, ist eine innenliegende Anschlagsfläche 24 angeordnet (siehe Figur 9), an der die optische Steckereinheit 18 bei der Montage im Steckverbindergehäuse 10 angelegt wird. Die Anschlagsfläche 24 verläuft beispielsweise vollständig entlang des Umfangs der kreiszylinderförmigen Aufnahme 16.

Zudem sind am Umfang der kreiszylinderförmigen Aufnahme 16 zwei Verdrehsicherungsnuten 25 angeordnet (siehe Fig. 2 und Fig. 9), in die im montierten Zustand Verdrehsicherungsnasen 27 der optischen Steckereinheit 18 eingreifen können. Die optische Steckereinheit 18 ist dann in einer vorgegebenen Drehposition zum Steckverbindergehäuse 10 fixiert.

Die Verdrehsicherungsnuten 25 und die Verdrehsicherungsnasen 27 können auch als Montagehilfe bei der Positionierung der optischen Steckereinheit 18 im Steckverbindergehäuse 10 verwendet werden.

Der Flansch 14 umfasst in der gezeigten Ausführungsform eine im Wesentlichen rechteckige Flanschplatte 26, die im Wesentlichen konzentrisch zum Grundkörper 12 ausgerichtet ist.

Die Flanschplatte 26 umfasst eine erste Befestigungsöffnung 28 und eine zweite Befestigungsöffnung 30. Durch die erste Befestigungsöffnung 28 kann eine Befestigungsschraube 32 und durch die zweite Befestigungsöffnung 30 eine Befestigungsschraube 34 gesteckt werden. Alternativ können andere Befestigungsmittel verwendet werden, die zur Befestigung der Flanschplatte 26 am Gehäuse 36 geeignet sind.

Die Befestigungsöffnungen 28, 30 sind in einem Randbereich der Flanschplatte 26 angeordnet. Im dargestellten Ausführungsbeispiel sind zwei Befestigungsöffnungen 28, 30 vorgesehen, die in diagonal entgegengesetzten Ecken 26a der Flanschplatte 26 angeordnet sind (siehe insbesondere Figur 2).

Die Befestigungsöffnungen 28, 30 haben dabei in einer ersten Richtung 38 einen Abstand von 15 mm bis 20 mm und in einer zweiten Richtung 40, die senkrecht auf der ersten Richtung 38 steht, einen Abstand von 20 mm bis 30 mm. Die Richtungen 38, 40 verlaufen im Wesentlichen entlang der Kanten der Flanschplatte 26.

Insgesamt hat die Flanschplatte 26 eine Breite von 20 mm bis 35 mm und eine Länge von 25 mm bis 40 mm. Dabei wird die Breite entlang der ersten Richtung 38 und die Länge entlang der zweiten Richtung 40 gemessen.

Der Grundkörper 12 hat dagegen einen Durchmesser von 20 - 30 mm.

Das Steckverbindergehäuse 10 ist einstückig hergestellt und aus einem Kunststoff, einem faserverstärkten Kunststoff oder einem Metall gefertigt. Insbesondere ist das Steckverbindergehäuse 10 aus einem Polyamid hergestellt. Auch kann das Steckverbindergehäuse 10 aus einem glasfaser- und/oder kohlefaserverstärkten Kunststoff gefertigt sein.

Das Steckverbindergehäuse 10 kann auch mittels eines 3D-Druckverfahrens hergestellt sein.

Ein Steckverbinder 42 zur optischen Datenübertragung umfasst ein Steckverbindergehäuse 10, in dessen Aufnahme 16 die optische Steckereinheit 18 angeordnet ist. Zusätzlich kann die optische Steckereinheit 18 mit einem Befestigungselement 44 im Steckverbindergehäuse 10 gehalten sein. Die optische Steckereinheit 18 kann zwei bis zwölf optische Fasern umfassen, die als Monomodefasern oder als Multimodefaser ausgebildet sind.

Mittels des Flansches 14 und den Befestigungsschrauben 32, 34 lässt sich das Steckverbindergehäuse 10 an einem Gehäuse 36 montieren.

Bei der Montage des Steckverbinders 42 im Gehäuse 36 wird beispielsweise zunächst der Steckverbinder 42 vormontiert. Das bedeutet, dass zumindest die optische Steckereinheit 18 im Steckverbindergehäuse 10 befestigt wird, bevor der Steckverbinder 42 in eine Montageöffnung 46 eingeführt wird (siehe Figur 6).

Danach wird der Steckverbinder 42 über das Steckverbindergehäuse 10 im Bereich der Montageöffnung 46 am Gehäuse 36 befestigt. Dafür wird im dargestellten Beispiel der zweite Abschnitt 22 des Steckverbindergehäuses 10 zunächst durch die Montageöffnung 46 hindurch gesteckt. Aufgrund der unterschiedlichen Durchmesser der beiden Abschnitte 20, 22 ist in jedem Fall sichergestellt, dass das Steckverbindergehäuse 10 nicht versehentlich falsch orientiert eingeführt wird (Poka Yoke). Der Flansch 14, genauer gesagt die Flanschplatte 26, liegt dann an einer Oberfläche des Gehäuses 36 an und wird mit den Befestigungsschrauben 32, 34 am Gehäuse 36 befestigt. Dafür werden die Befestigungsschrauben 32, 34 durch die Befestigungsöffnungen 28, 30 hindurch gesteckt und in eine erste Gewindeöffnung 48 und eine zweite Gewindeöffnung 50 im Gehäuse 36 eingedreht.

Bei der Demontage des Steckverbinders 42 vom Gehäuse 36 werden die vorgenannten Arbeitsschritte in umgekehrter Reihenfolge durchgeführt.

## Patentansprüche

1. Steckverbindergehäuse (10) mit einem im Wesentlichen kreiszylinderförmigen Grundkörper (12), der eine Aufnahme (16) für eine optische Steckereinheit (18) aufweist, und einem Flansch (14) zur Befestigung des Steckverbindergehäuses (10) im Bereich einer Montageöffnung (46) eines Gehäuses (36), wobei der Flansch (14) eine, insbesondere im Wesentlichen rechteckige, Flanschplatte (26) umfasst, in der mindestens zwei Befestigungsöffnungen (28, 30) angeordnet sind, mittels derer das Steckverbindergehäuse (10) am Gehäuse (36) befestigt werden kann.

2. Steckverbindergehäuse (10) nach Anspruch 1, **dadurch gekennzeichnet, dass** die Befestigungsöffnungen (28, 30) in einem Randbereich der Flanschplatte (26) angeordnet sind, insbesondere in den Ecken (26a).

3. Steckverbindergehäuse (10) nach Anspruch 1 oder 2, **dadurch gekennzeichnet, dass** es einstückig hergestellt ist und vorzugsweise aus einem Kunststoff, einem faserverstärkten Kunststoff oder einem Metall gefertigt ist.

4. Steckverbindergehäuse (10) nach Anspruch 3, **dadurch gekennzeichnet, dass** das Steckverbindergehäuse (10) aus einem Polyamid gefertigt ist.

5. Steckverbindergehäuse (10) nach Anspruch 3, **dadurch gekennzeichnet, dass** es aus einem glasfaser- und/oder kohlefaserverstärkten Kunststoff gefertigt ist.

6. Steckverbindergehäuse (10) nach einem der vorhergehenden Ansprüche, **dadurch gekennzeichnet, dass** es mittels eines 3D-Druckverfahrens hergestellt ist.

7. Steckverbindergehäuse (10) nach einem der vorhergehenden Ansprüche, **dadurch gekennzeichnet, dass** die Flanschplatte (26) eine Breite von 20 mm bis 35 mm, vorzugsweise von 15 mm bis 30 mm, und eine Länge von 25 mm bis 40 mm, vorzugsweise von 30 mm bis 35 mm, hat.

8. Steckverbindergehäuse (10) nach einem der vorhergehenden Ansprüche, **dadurch gekennzeichnet, dass** die Befestigungsöffnungen (28, 30) in einer ersten Richtung (38) einen Abstand von 15 mm bis 20 mm und in einer zweiten, senkrecht auf der ersten Richtung (38) stehenden Richtung (40) einen Abstand von 20 mm bis 30 mm zueinander haben, wobei die Richtungen (38, 40) jeweils entlang einer Kante der Flanschplatte (26) verlaufen.

9. Steckverbindergehäuse (10) nach einem der vorhergehenden Ansprüche, **dadurch gekennzeichnet, dass** der Grundkörper (12) einen ersten und einen zweiten Abschnitt (20, 22) aufweist, deren Durchmesser unterschiedlich sind, insbesondere wobei der erste Abschnitt (20) einer ersten Seite des Flansches (14) und der zweite Abschnitt (22) einer zweiten, der ersten Seite entgegengesetzten Seite des Flansches (14) zugeordnet ist.

10. Steckverbindergehäuse (10) nach Anspruch 9, **dadurch gekennzeichnet, dass** der zweite Abschnitt (22) eine innenliegende Anschlagsfläche (24) für die optische Steckereinheit (18) aufweist.

11. Steckverbindergehäuse (10) nach einem der vorhergehenden Ansprüche, **dadurch gekennzeichnet, dass** der Grundkörper (12) einen Durchmesser von 20 mm bis 30 mm, vorzugsweise von 22 mm bis 25 mm, hat.

12. Steckverbindergehäuse (10) nach einem der vorhergehenden Ansprüche, **dadurch gekennzeichnet, dass** in der Aufnahme (16) mindestens eine Verdrehsicherungsnut (25) zur Verdrehsicherung einer in der Aufnahme angeordneten optischen Steckereinheit (18) angeordnet ist.

13. Steckverbinder (42) zur optischen Datenübertragung, mit einem Steckverbindergehäuse (10) nach einem der vorhergehenden Ansprüche, wobei in der Aufnahme (16) eine optische Steckereinheit (18) angeordnet ist.

14. Steckverbinder (42) nach Anspruch 13, **dadurch gekennzeichnet, dass** die optische Steckereinheit (18) zwei bis zwölf optische Fasern umfasst, die als Monomodefasern oder als Multimodefasern ausgebildet sind.

15. Steckverbinder (42) nach einem der Ansprüche 13 und 14, **dadurch gekennzeichnet, dass** die Steckereinheit (18) eine Verdrehsicherungsnase (27) umfasst und die Verdrehsicherungsnase (27) in der Verdrehsicherungsnut (25) angeordnet ist.
